# FASCICULE DE BREVET EUROPEEN

(11) **EP 2 486 354 B1**
(45) Date de publication et mention de la délivrance du brevet: **25.09.2013**
(21) Numéro de dépôt: 10773841.1
(22) Date de dépôt: 07.10.2010
(51) Int. Cl.: F28C 1/00, F28F 25/08, F28G 1/02, F28G 1/08, F28G 1/10, F28G 1/14, F28G 15/02, F28G 15/04, F15B 15/14

(54) **MACHINE DE DETARTRAGE DE CORPS ALVEOLAIRES D'ECHANGEUR THERMIQUE AIR-EAU**
MASCHINE ZUR ABLAGERUNGSENTFERNUNG IN ZELLKÖRPERN EINES LUFT-WASSER-WÄRMETAUSCHERS
MACHINE FOR DESCALING CELLULAR BODIES OF AN AIR-WATER HEAT EXCHANGER

(30) Priorité: 09.10.2009 FR 0904835
(43) Date de publication de la demande: 15.08.2012
(73) Titulaire: Arts, 75013 Paris (FR)
(72) Inventeur: MEURVILLE, Jean-Marc, F-89100 Nailly (FR); GOMEZ, Rémi, F-75019 Paris (FR); LAURENT, Nicolas, F-51100 Reims (FR); MAJOREL, Thomas, F-12150 Buzeins (FR); DEGRANGE, Michel, F-75012 Paris (FR); BLOCBERGEN, Paule, F-63100 Clermont-Ferrand (FR)
(74) Mandataire: Beaudouin-Lafon, Emmanuel
(86) Numéro de dépôt international: PCT/EP2010/006134
(87) Numéro de publication internationale: WO 2011/042187

(56) Documents cités:
- EP-A1- 2 096 395
- WO-A1-2005/107970
- FR-A1- 2 903 178
- US-A- 3 938 535

## Description

La présente invention concerne les échangeurs thermiques air/eau, comme mis en oeuvre par exemple dans une tour de réfrigération et plus particulièrement le nettoyage des surfaces de ruissellement. La présente invention concerne particulièrement une machine de détartrage correspondant au préambule de la revendication 1. Une telle machine est connue, p. ex., du document EP 2 096 395 A1.

### ARRIERE PLAN DE L'INVENTION

Dans les tours de réfrigération, le refroidissement de l'eau, par exemple d'un circuit secondaire de condensation, est réalisé principalement par la vaporisation d'une fraction de l'eau à refroidir qui ruisselle sur des surfaces prévues à cet effet et balayées par un courant d'air contraire au sens de ruissellement et, secondairement, lors de la convection qui se produit sur les surfaces d'échange dans l'eau elle-même.

Ces surfaces sont portées par un corps d'échange, communément appelé « packing », constitué par des feuilles principalement en PVC mais quelques fois métalliques, qui sont assemblées les unes aux autres pour former une structure alvéolaire. Chaque alvéole de cette structure est en forme de tube d'environ 1,5 mètre de long, la dimension moyenne de sa section étant de l'ordre de quelques centimètres. La paroi des alvéoles est fine (quelques dixièmes de millimètres) et peut être percée de nombreux orifices. Les corps d'échange sont suspendus dans la tour de réfrigération, entre une installation de dispersion de l'eau à refroidir et un bac inférieur de récupération de l'eau refroidie.

Des moyens de captage sont disposés en partie supérieure de la tour pour retenir, autant que faire se peut, les gouttelettes d'eau entraînées par l'air de refroidissement. Il est en effet important de ne pas rejeter dans l'atmosphère cette eau porteuse de germes ayant pu proliférer dans la tour où règne une température propre à cette prolifération.

Au cours de son utilisation, le corps d'échange se charge d'un dépôt (tartre) de sels minéraux du fait de l'évaporation qui se produit au niveau des surfaces de ruissellement. Ce dépôt croit avec le temps pour atteindre jusqu'à dix fois le poids du corps lui-même dans certaines installations.

Ce dépôt présente de nombreux inconvénients : il est un obstacle au ruissellement donc à l'efficacité de l'échange thermique, il est un nid de rétention des différents germes de l'eau dans une ambiance propice à leur prolifération, il constitue une surcharge très importante pour la structure de soutien du corps d'échange qui en général est suspendu à l'intérieur de la tour....

Il existe, au moins en théorie, plusieurs moyens de remédier à cet inconvénient.

L'un d'eux consiste à traiter chimiquement l'eau à refroidir pour la débarrasser de ses sels et ainsi éviter l'entartrage des surfaces d'échange. Ce procédé n'est pas envisageable dans les tours de refroidissement des centrales de production d'énergie électrique, thermiques ou nucléaires.

On peut également procéder à une dissolution chimique du tartre par des solutions appropriées. Cette manière de procéder pose le délicat problème du traitement des effluents qui n'est pas sans incidence économique sur le coût de l'opération.

On peut envisager un secouage du corps d'échange par tout moyen mécanique approprié ; cette méthode, pour avoir été testée, conduit à une dégradation du corps d'échange qui le rend pratiquement impropre à une utilisation ultérieure.

On peut enfin procéder au nettoyage mécanique de ce corps d'échange après son démontage, ce qui constitue une opération extrêmement coûteuse compte tenu de l'importance volumique de ce corps (10 à 12000 mètres cubes par unités de deux mètres cubes environ).

Le document FR 2.903.178 propose un procédé et une machine permettant d'éviter les inconvénients des solutions existantes ou envisageables afin de nettoyer les corps d'échange mis en oeuvre dans les tours aéro-réfrigérantes des centrales de production électrique, en particulier des centrales nucléaires.

### OBJET DE L'INVENTION

L'invention propose une solution alternative à celle exposée dans le document cité ci-dessus grâce à laquelle on est certain qu'un alvéole traité n'est plus recouvert de tartre ou ne comporte qu'une quantité acceptable de tartre résiduel.

Ainsi, l'invention a-t-elle pour objet une machine de détartrage des alvéoles d'un corps alvéolaire de ruissellement mis en oeuvre dans un échangeur air-eau qui comporte au moins un outil avec une pointe active, monté mobile sur un bâti entre deux positions le long d'une direction commune à tous les outils portés par le bâti, la pointe active de cet outil étant portée par l'extrémité d'une tige de vérin dont le corps est monté mobile par rapport au bâti le long de son axe, un piston solidaire de la tige définissant dans le corps une première chambre en liaison permanente avec une source de fluide sous pression et une deuxième chambre traversée par la tige, en communication avec la première chambre tant que la tige est au moins partiellement rétractée dans le corps du vérin et isolée de cette dernière et en communication avec l'atmosphère (ou toute bâche de récupération de fluide si celui-ci n'est pas de l'air) lorsque la tige est en position d'extension extrême hors du corps.

La pointe active de l'outil se présente sous la forme d'un embout en acier traité dont les dimensions sont adaptées à celles des alvéoles de sorte que si les parois de celles-ci sont en acier, chaque embout constitue un organe de raclage du tartre tandis que si les parois des alvéoles sont en matière plastique (PVC) l'embout provoque une dilatation locale de l'alvéole qui conduit au craquellement du tartre et à son détachement.

La conception ci-dessus de chaque outil permet de respecter sans la détruire la structure relativement fragile du « packing ». En effet, lors de l'utilisation de l'outil, chaque tige est en extension maximale par rapport au corps du vérin. Dans cet état, la force d'application (de pénétration dans l'alvéole) de l'outil est égale et limitée à la pression de la source multipliée par la section de la première chambre. Il suffit donc de régler la pression à une valeur qui confine cette force en deçà d'une valeur admissible pour, lors d'un blocage, empêcher la détérioration du packing. Si la résistance à la pénétration est supérieure à cette force, la tige se rétracte dans le corps du vérin et ouvre la communication entre les deux chambres du vérin. A ce moment, la pression s'établit dans la deuxième chambre et la force d'application de l'outil tombe à une valeur égale à la pression multipliée par la différence des sections de la première et de la seconde chambre. Toutes choses égales par ailleurs, le rapport des diamètres de tige et de piston constitue le coefficient diviseur de la force d'application de l'outil sur le packing. Cette disposition permet de monter une pluralité d'outils sur un même bâti mobile, chaque outil étant conservé en service ou mis hors service selon la résistance qu'il rencontre lors de sa pénétration dans l'alvéole qu'il est destiné à traiter.

Dans un mode particulier de réalisation de chaque outil, la communication entre la première et la seconde chambres de chaque vérin est assurée par un jeu entre le corps du vérin et le piston.

Une variante de cette réalisation prévoit une fuite permanente entre le corps du vérin et la tige de sorte que la mise à l'atmosphère de la seconde chambre s'effectue par cette fuite. Bien entendu, la fuite en question est de section nettement inférieure à celle du jeu autour du piston pour que la pression de la source puisse s'établir dans la seconde chambre. Dans ce cas, lors de l'extension maximale de la tige, le piston isole la seconde chambre de la fuite autour de la tige au moyen d'un joint dont il est pourvu et qui, dans cet état d'extension maximale, est au contact du fond du corps du vérin traversé par la tige.

Selon une particularité de construction, la liaison mobile de chaque corps de vérin par rapport au bâti est réalisée au moyen d'un chariot monté à coulissement sur le bâti dans la direction parallèlement à l'axe du vérin, la liaison entre le chariot et le corps de vérin étant élastiquement extensible le long de cet axe sur une amplitude déterminée et auto adaptatrice dans un plan perpendiculaire à cette direction.

Dans un mode particulier de réalisation, la liaison susdite comporte une pluralité de liens supérieurs et inférieurs non élastiques et déformables formant haubans entre le chariot et le corps de chaque vérin, la longueur des liens étant telle que lorsque les liens supérieurs sont rectilignes, les liens inférieurs sont en ligne brisée et inversement, les points de cassure des liens étant réunis par des organes élastiques assurant la suspension avec une tension déterminée dans les liens. Les liens sont soit des câbles soit des leviers articulés entre eux au point de cassure et respectivement au corps du vérin et au bâti à leurs extrémités libres.

Enfin, chaque tige de vérin est guidée par rapport au bâti au moyen d'un guide solidaire du bâti au moyen d'une liaison auto adaptatrice dans un plan perpendiculaire à l'axe de la tige.

D'autres caractéristiques et avantages de l'invention ressortiront de la description donnée ci-après d'un exemple de réalisation de l'invention.

### BREVE DESCRIPTION DES DESSINS

Il sera fait référence aux dessins annexés parmi lesquels :
- la figure 1 illustre par un schéma de principe une machine conforme à l'invention,
- la figure 2 est un schéma de détail de la figure 1,
- la figure 3 est un schéma d'une réalisation particulière de l'aiguille de détartrage.

### DESCRIPTION DETAILLEE DE L'INVENTION

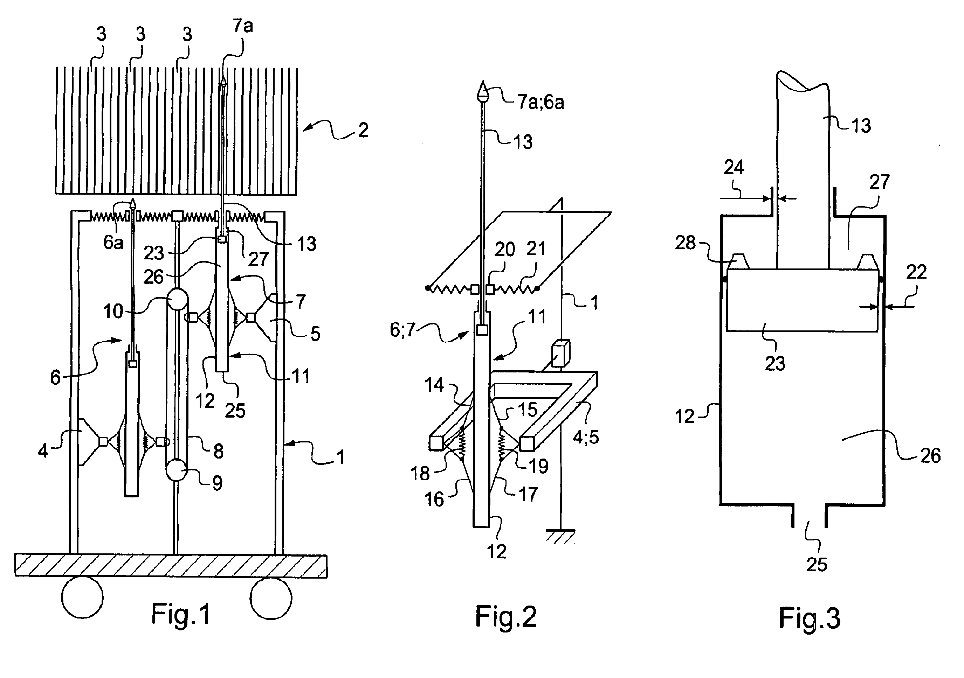

A la figure 1, on a représenté un bâti 1 de machine, susceptible d'être déplacée sous un corps 2 d'échange thermique par ruissellement qui comprend une pluralité d'alvéoles contigus à nettoyer du dépôt de tartre qui recouvre leur paroi. Ce bâti forme le support de deux chariots 4 et 5 montés à coulissement vertical dans le bâti 1. Ces chariots sont chacun porteurs d'une série d'aiguilles 6, 7 de détartrage (seulement une aiguille de chaque série est visible sur la figure).

On comprend de cette figure que lorsqu'on élève un chariot 4, 5 le long du bâti 1, on enfonce les aiguilles qu'il porte dans une alvéole. Chaque aiguille possède une pointe en acier traité 6a, 7a dont les dimensions et la forme sont adaptés aux dimensions de l'alvéole à traiter et au matériau des parois. Ainsi, la pointe de chaque aiguille sera dans une forme plutôt ogivale pour créer une dilatation de l'alvéole dans laquelle elle pénètre lorsque celle-ci est en matière plastique, pouvant supporter une déformation qui conduit au craquèlement et au détachement du tartre. Cette pointe affectera plutôt la forme d'un racloir si la paroi alvéolaire est métallique, peu déformable et de laquelle le détachement du tartre est obtenu par raclage plutôt que par déformation.

Dans le cas du schéma, les chariots sont animés de leur mouvement ascendant et descendant au moyen d'un entraînement centralisé, ici représenté par une chaîne ou courroie 8 à laquelle est relié chaque chariot et qui s'enroule sur deux roues ou poulies 9 et 10 dont une est motorisée.

Dans cette architecture générale, la machine selon l'invention possède des points particuliers qui apparaîtront des figures suivantes.

A la figure 2, certains des éléments déjà décrits sont représentés avec les mêmes références. L'aiguille 6 est en forme de vérin 11 pour des raisons expliquées ci-après. Le corps 12 de ce vérin est attelé au chariot 4 par un système de suspension qui possède une compliance autorisant l'aiguille à trouver sa voie », c'est-à-dire à se déplacer latéralement si la pointe qu'elle porte n'est pas tout à fait centrée par rapport à l'alvéole dans lequel elle doit pénétrer. Cette compliance est obtenue au niveau de la liaison du corps 12 du vérin 11 au chariot 4 et au niveau du guidage de la tige 13 de ce vérin qui constitue l'aiguille proprement dite, équipée en extrémité de la pointe 6a susdite.

La liaison du corps 12 au chariot 4 comporte des liens hauts, ici deux câbles 14 et 15 et deux liens bas, les câbles 16 et 17. Les câbles sont inextensibles et leur longueur est telle que lorsque les câbles hauts ou bas sont tendus, les câbles bas ou hauts sont détendus, ce qui autorise un mouvement vertical entre le vérin 11 et le chariot 4. L'amplitude de ce mouvement est fonction de la surlongueur des câbles par rapport à la longueur de ceuxci qui rendrait impossible ce mouvement relatif, toutes choses égales par ailleurs. En outre, la liaison comporte des organes élastiques 18 et 19 qui s'étendent entre un câble haut et bas d'une paire de câbles, attachés à ceuxci en des points qui constituent une cassure de chaque câble en deux tronçons tendus. Chaque aiguille est donc élastiquement suspendue au chariot avec la possibilité de bouger latéralement par rapport au cadre jusqu'à ce que les câbles opposés au sens du mouvement se tendent et limitent l'amplitude de ce mouvement et de bouger verticalement jusqu'à ce que les câbles opposés au sens du mouvement se tendent également.

Par ailleurs, la partie de l'aiguille qui est formée par la tige 13 du vérin 11, en extension hors du corps 12 de ce vérin, est guidée par une sorte de palier 20 qui lui-même est maintenu par une liaison élastique 21 au bâti 1. L'aiguille est donc capable d'une certaine mobilité latérale par rapport à ce bâti.

Ce montage permet donc la pénétration de l'aiguille dans l'alvéole vers lequel elle peut dévier. Lorsque la résistance à la pénétration dans l'alvéole est supérieure à la force élastique de rappel de la liaison aiguille /chariot, les câbles 16 et 17 se tendent et l'aiguille est forcée dans son mouvement vers le haut tant que l'effort résistant n'atteint pas une valeur critique, comme cela sera exposé ci-après. De la même manière, si l'aiguille est retenue par un frottement important lors de son mouvement vers le bas, les câbles 14 et 15 se tendent et la force du chariot descendant est transmise directement à l'aiguille qui est obligatoirement extraite de l'alvéole.

Dans une variante non représentée, les câbles sont remplacés par des leviers articulés entre eux, au point d'accrochage du ressort 18, 19 et par leur extrémité libre au corps 12 et au chariot 4. On notera que le nombre de câbles ou de leviers peut être supérieur aux deux paires représentées, en étant régulièrement répartis autour de l'aiguille.

La figure 3 illustre la constitution d'une aiguille de détartrage mise en oeuvre dans l'invention. Le corps 12 du vérin contient, avec un jeu 22 calibré, un piston 23 solidaire de la tige 13. Cette tige 13 traverse avec un jeu calibré 24 un fond du corps 12 du vérin 11 tandis que le fond opposé est en permanence en communication avec une source de fluide sous pression, de préférence de l'air, par un orifice d'alimentation 25.

Le piston 23 divise donc le volume interne du corps du vérin en deux chambres 26 et 27 qui communiquent par le jeu 22. Le rapport des diamètres de la tige et du piston est tel que la surface utile du piston dans la chambre 27, qui contient la tige, est de l'ordre de 70 à 80% de la surface utile qu'offre le piston à la pression régnant dans la chambre 26. La chambre 27 communique par le jeu 24 avec l'atmosphère extérieure.

La face supérieure du piston 23 est équipée d'un joint 28 en périphérie de cette dernière autour de la tige 13. Lorsque la tige est en extension maximale, le joint 28 est appliqué contre la face interne de l'extrémité du corps 12 du vérin 11. La partie de la chambre 27 qui entoure la tige, à l'intérieur du joint, est à la pression atmosphérique.

Le fluide admis dans la chambre 26 est à une pression P appelée pression de réglage. Sous l'action de cette pression, malgré la fuite autour du piston 23, la tige atteint son extension maximale hors du corps et le piston est plaqué contre le fond du corps sur le joint 28. La force qui maintient la tige sortie est donc P x S, avec S la surface inférieure du piston 23.

En fonctionnement, l'aiguille dans cette position sortie est enfoncée dans un alvéole 3 par le chariot 4, 5. Si la résistance à l'enfoncement est élevée, la liaison élastique décrite en regard de la figure 2 se déforme jusqu'à ce que les câbles 16 et 17 soient tendus. Ensuite, lorsque la force de résistance devient supérieure à P x S, le piston 23 décolle du fond du corps de vérin et la chambre 27 est en communication avec la chambre 26 ; La pression P s'établit rapidement dans la chambre 26 et la force qui demeure appliquée à la tige 13 en direction de sa sortie est réduite à 0,2 ou 0,3 fois la valeur P x S. Dans ces conditions, la tige s'enfonce dans le corps du vérin au lieu d'être forcée en direction du packing. Le risque de détériorer ce dernier est ainsi éliminé, surtout si on a ajusté la valeur P de la pression en fonction de la fragilité des parois des alvéoles. Ainsi, le travail des autres aiguilles portées par le chariot peut-il continuer normalement. Les jeux 22 et 24 sont adaptés à la cadence de fonctionnement de l'appareil. Le jeu 24 sera de plus petite section que le jeu 22 pour que la pression P s'établisse rapidement dans la chambre 27 et que l'aiguille soit mise rapidement hors service alors que le chariot porte-aiguille continue sa course.

## Revendications

1. Machine de détartrage des alvéoles (3) d'un corps alvéolaire (2) de ruissellement mis en oeuvre dans un échangeur air/eau, comportant au moins un outil (6,7) avec une pointe active (6a,7a), monté mobile sur un bâti (1) entre deux positions le long d'une direction commune à tous les outils (6,7) portés par le bâti (1), **caractérisée en ce que** la pointe active (6a,7a) de cet outil est portée par l'extrémité d'une tige (13) de vérin (11) dont le corps (12) est monté mobile par rapport au bâti (1) le long de son axe, un piston (23) solidaire de la tige (13) définit dans le corps une première chambre (26) en liaison permanente avec une source de fluide sous pression et une deuxième chambre (27) traversée par la tige (13), en communication avec la première chambre (26) tant que la tige (13) est au moins partiellement rétractée dans le corps (12) du vérin et isolée de cette dernière et mise à l'échappement lorsque la tige (13) est en position d'extension extrême hors du corps (12).

2. Machine de détartrage selon la revendication 1, **caractérisée en ce que** la communication entre la première (26) et la seconde (27) chambres de chaque vérin (11) est assurée par un jeu (22) entre le corps (12) du vérin (11) et le piston (23).

3. Machine de détartrage selon la revendication 2, **caractérisée en ce qu'**une fuite permanente (24) est ménagée entre le corps (12) du vérin et la tige (13) de sorte que la mise à l'échappement de la seconde chambre (27) s'effectue par cette fuite.

4. Machine de détartrage selon la revendication 3, **caractérisée en ce que** la fuite susdite (24) est de section nettement inférieure au jeu (22) susdit entre le corps et le piston pour que la pression (P) de la source puisse s'établir dans la seconde chambre (27).

5. Machine de détartrage selon la revendication 4, **caractérisée en ce que** le piston (23) isole la seconde chambre (27) de la fuite (24) autour de la tige au moyen d'un joint (28) dont il est pourvu et qui, dans l'état d'extension maximale de la tige (13), est au contact du fond du corps (12) du vérin traversé par la tige.

6. Machine de détartrage selon l'une des revendications précédentes, **caractérisée en ce que** la liaison mobile de chaque corps (12) de vérin (11) par rapport au bâti (1) est réalisée au moyen d'un chariot (4,5) monté à coulissement sur le bâti (1) dans la direction parallèle à l'axe du vérin (11), la liaison entre le chariot (4,5) et le corps (12) de vérin étant élastiquement extensible le long de cet axe sur une amplitude déterminée et auto adaptatrice dans un plan perpendiculaire à cette direction.

7. Machine de détartrage selon la revendication 6, **caractérisée en ce que** la liaison susdite comporte une pluralité de liens supérieurs (14,15) et inférieurs (16,17) non élastiques et déformables formant haubans entre le chariot (4) et le corps (12) de chaque vérin, la longueur des liens étant telle que lorsque les liens supérieurs (14,15) sont rectilignes, les liens inférieurs (16,17) sont en ligne brisée et inversement, les points de cassure des liens étant réunis par des organes élastiques (16,20) assurant la suspension de l'aiguille (6,7) au chariot (4,5) avec une tension déterminée dans les liens.

8. Machine de détartrage selon la revendication 7 **caractérisée en ce que** les liens sont des câbles.

9. Machine de détartrage selon la revendication 7, **caractérisée en ce que** les liens susdits sont des leviers articulés entre eux au point de cassure et respectivement au corps du vérin et au bâti à leurs extrémités libres.

10. Machine de détartrage selon l'une des revendications précédentes, **caractérisée en ce que** chaque tige (13) de vérin est guidée par rapport au bâti (1) au moyen d'un guide solidaire (20) du bâti au moyen d'une liaison (21) auto adaptatrice dans un plan perpendiculaire à l'axe de la tige.

## Patentansprüche

1. Maschine zur Ablagerungsentfernung in Zellen (3) eines Zellkörpers (2) durch Berieselung in einem Luft-Wasser-Wärmetauscher, umfassend mindestens ein Werkzeug (6, 7) mit einer aktiven Spitze (6a, 7a), das an einem Gestell (1) zwischen zwei Positionen entlang einer für alle vom Gestell getragenen Werkzeuge (6, 7) gemeinsamen Richtung beweglich angebracht ist, **dadurch gekennzeichnet, dass** die aktive Spitze (6a, 7a) dieses Werkzeugs an dem Ende einer Kolbenstange (13) eines Stellzylinders (11) gehalten ist, dessen Gehäuse (12) relativ zum Gestell (1) entlang seiner Achse beweglich angeordnet ist, und dass im Gehäuse ein fest mit der Stange (13) verbundener Kolben (23) eine erste Kammer (26), die in ständiger Verbindung mit einer Druck-Fluidquelle ist, und eine von der Stange (13) durchsetzte zweite Kammer (27) begrenzt, die in Verbindung mit der ersten Kammer (26) steht, solange die Stange (13) zumindest teilweise in das Gehäuse (12) des Stellzylinders zurückgezogen ist, und die von der ersten Kammer isoliert und entlüftet wird, wenn sich die Stange (13) in maximal aus dem Gehäuse (12) ausgefahrener Position befindet.

2. Maschine zur Ablagerungsentfernung nach Anspruch 1, **dadurch gekennzeichnet, dass** die Verbindung zwischen der ersten Kammer (26) und der zweiten Kammer (27) eines jeden Stellzylinders (11) durch ein Spiel (22) zwischen dem Gehäuse (12) des Stellzylinders (11) und dem Kolben (23) gewährleistet ist.

3. Maschine zur Ablagerungsentfernung nach Anspruch 2, **dadurch gekennzeichnet, dass** zwischen dem Gehäuse (12) des Stellzylinders und der Stange (13) ein permanentes Leck (24) ausgebildet ist, so dass die Entlüftung der zweiten Kammer (27) durch dieses Leck erfolgt.

4. Maschine zur Ablagerungsentfernung nach Anspruch 3, **dadurch gekennzeichnet, dass** das oben genannte Leck (24) einen wesentlich geringeren Querschnitt hat als das oben genannte Spiel (22) zwischen dem Gehäuse und dem Kolben, damit sich der Druck (P) der Quelle in der zweiten Kammer (27) aufbauen kann.

5. Maschine zur Ablagerungsentfernung nach Anspruch 4, **dadurch gekennzeichnet, dass** der Kolben (23) die zweite Kammer (27) vom Leck (24) um die Stange mit Hilfe einer Dichtung (28), mit der er versehen ist, isoliert und im Zustand des maximalen Ausfahrens der Stange (13) Kontakt mit dem von der Stange durchsetzten Boden des Gehäuses (12) des Stellzylinders hat.

6. Maschine zur Ablagerungsentfernung nach einem der vorhergehenden Ansprüche, **dadurch gekennzeichnet, dass** die bewegliche Verbindung eines jeden Gehäuses (12) des Stellzylinders (11) relativ zum Gestell (1) mit Hilfe eines Schlittens (4, 5) erfolgt, der am Gestell (1) parallel zur Achse des Stellzylinders (11) gleitend angeordnet ist, wobei die Verbindung zwischen dem Schlitten (4, 5) und dem Gehäuse (12) des Stellzylinders entlang dieser Achse in einem festgelegten Maße elastisch dehnbar ist und sich automatisch in einer Ebene senkrecht zu dieser Richtung anpasst.

7. Maschine zur Ablagerungsentfernung nach Anspruch 6, **dadurch gekennzeichnet, dass** die oben genannte Verbindung eine Vielzahl an oberen Verbindungsgliedern (14, 15) und unteren Verbindungsgliedern (16, 17) umfasst, die unelastisch und verformbar sind und die zwischen dem Schlitten (4) und dem Gehäuse (12) eines jeden Stellzylinders Verspannungen bilden, wobei die Länge der Verbindungsglieder eine solche ist, dass, wenn die oberen Verbindungsglieder (14, 15) geradlinig sind, die unteren Verbindungen (15, 16) geknickt sind und umgekehrt, wobei die Knickstellen der Verbindungen durch elastische Organe (16, 20) verbunden sind, die die Aufhängung der Nadel (6, 7) am Schlitten (4, 5) mit einer festgelegten Spannung in den Verbindungsgliedern sicherstellen.

8. Maschine zur Ablagerungsentfernung nach Anspruch 7, **dadurch gekennzeichnet, dass** es sich bei den Verbindungsgliedern um Seile handelt.

9. Maschine zur Ablagerungsentfernung nach Anspruch 7, **dadurch gekennzeichnet, dass** die oben genannten Verbindungsglieder Hebel sind, die an der Knickstelle miteinander und an ihren freien Enden mit dem Gehäuse des Stellzylinders beziehungsweise dem Gestell gelenkig verbunden sind.

10. Maschine zur Ablagerungsentfernung nach einem der vorhergehenden Ansprüche, **dadurch gekennzeichnet, dass** jede Stange (13) des Stellzylinders relativ zum Gestell (1) mit Hilfe einer Führung (20) geführt ist, die mittels einer sich automatisch in einer Ebene senkrecht zu der Achse der Stange anpassenden Verbindung (21) mit dem Gestell verbunden ist.

## Claims

1. A machine for descaling the cells (3) of a cellular trickling-water body (2) employed in an air and water heat exchanger, having at least one tool (6, 7) with an active tip (6a, 7a), mounted so that it can move on a frame (1) between two positions in a direction shared by all the tools (6, 7) carried by the frame (1), **characterized in that** the active tip (6a, 7a) of this tool is carried by the end of a rod (13) of an actuator (11), the body (12) of which is mounted so that it can move relative to the frame (1) along its axis, a piston (23) integral with the rod (13) defines in the body a first chamber (26) permanently connected to a source of pressurized fluid, and a second chamber (27) through which the rod (13) passes and which is in communication with the first chamber (26) as long as the rod (13) is at least partially retracted into the body (12) of the actuator and isolated from the latter and connected to an outlet when the rod (13) is in its furthest extended position outside the body (12).

2. The descaling machine as claimed in claim 1, **characterized in that** communication between the first (26) and second (27) chambers of each actuator (11) is effected by a clearance (22) between the body (12) of the actuator (11) and the piston (23).

3. The descaling machine as claimed in claim 2, **characterized in that** a permanent leak (24) is created between the body (12) of the actuator and the rod (13) so that the second chamber (27) is connected to an outlet by this leak.

4. The descaling machine as claimed in claim 3, **characterized in that** the cross section of the abovementioned leak (24) is much less than the abovementioned clearance (22) between the body and the piston so that the pressure (P) of the source can be established in the second chamber (27).

5. The descaling machine as claimed in claim 4, **characterized in that** the piston (23) isolates the second chamber (27) from the leak (24) around the rod by means of a seal (28) with which it is provided and which, in the maximally extended state of the rod (13), is in contact with the base of the body (12) of the actuator through which the rod passes.

6. The descaling machine as claimed in one of the preceding claims, **characterized in that** each body (12) of actuators (11) is movably connected with respect to the frame (1) by means of a carriage (4, 5) mounted so as to slide on the frame (1) in the direction parallel to the axis of the actuator (11), the connection between the carriage (4, 5) and the actuator body (12) being elastically extendable along this axis over a specified and self-adjusting amplitude in a plane perpendicular to this direction.

7. The descaling machine as claimed in claim 6, **characterized in that** the abovementioned connection has a plurality of inelastic and deformable upper (14, 15) and lower (16, 17) links forming stays between the carriage (4) and the body (12) of each actuator, the length of the links being such that, when the upper links (14, 15) are straight, the lower links (16, 17) are bent and vice versa, the break points of the links being joined by elastic members (16, 20) which effect the suspension of the needle (6, 7) on the carriage (4, 5) with a specified degree of tension in the links.

8. The descaling machine as claimed in claim 7, **characterized in that** the links are cables.

9. The descaling machine as claimed in claim 7, **characterized in that** the abovementioned links are levers articulated together at the break point and respectively at the body of the actuator and at the frame at their free ends.

10. The descaling machine as claimed in one of the preceding claims, **characterized in that** each actuator rod (13) is guided relative to the frame (1) by means of a guide (20) integral with the frame a self-adjusting connection (21) in a plane perpendicular to the axis of the rod.
